# EUROPEAN PATENT SPECIFICATION

(11) **EP 2 063 745 B1**
(45) Date of publication and mention of the grant of the patent: **29.10.2014**
(21) Application number: 07808829.1
(22) Date of filing: 19.09.2007
(51) Int. Cl.: A47J 36/08

(54) **COOKING UTENSIL**
KOCHUTENSIL
USTENSILE DE CUISSON

(30) Priority: 19.09.2006 SE 0601926
(43) Date of publication of application: 03.06.2009
(73) Proprietor: OBH Nordica Holding A/S, 2630 Taastrup (DK)
(72) Inventor: EK, Peter, 175 61 Järfälla (SE)
(74) Representative: Joergensen, Bjoern Barker
(86) International application number: PCT/SE2007/000820
(87) International publication number: WO 2008/036020

(56) References cited:
- US-A- 2 083 017
- US-A- 2 083 017
- US-A- 4 310 418
- US-A- 5 653 881
- US-A- 5 730 045

## Description

The current invention pertains to a cooking pot for preparing food comprising a pot with a circular horizontal cross section and at least one drainage device and at least one handle on the outside of the cooking pot as well as a cover comprising a perpendicular, annular flange, the diameter of which is slightly less than the inner diameter of the pot, a covering part, and at least one handle and which flange has at least one radial through hole, and where the at least one through hole is arranged so that, when the cover is arranged on the pot, the peripheral position of the hole coincides with that of one of at least one drainage device when the peripheral positions of the cover and the handles on the cover coincide with each other and the peripheral position of the hole does not coincide with that of one of at least one drainage device, when the peripheral positions of the pot and the handles on the pot do not coincide with each other.

### Background and State of the Art

Such pots are previously known by for example US 5,730,045 A, US 5,653,881 A and US 4,310,418 A. These patents describe pots in which it is possible to shift between a drainage position, when the holes in the flange of the cover peripherically coincide with a drainage device in the pot, and a closed position for cooking, when the hole or the holes do not coincide with the drainage device, but are closed towards the inner periphery of the pot. To shift the cover between these positions the upper side of the cover is arranged with a centrally located knob. The two latter patents moreover describe the knob containing information about how to direct the knob for the cover to be in one or the other position, in relation to the drainage device of the pot. From US 2,083,017 it is previously known a cooking pot where also the cover has a handle designed to in its rotational position coincide with the handle of the pot when the cover is in the drainage position.

Despite these solutions, the devices shown are fraught with certain deficiencies. Despite the design of the knobs, they do not contain unequivocal information about how the cover should be turned to be in one or the other position. Furthermore, the frequent problem remains with the cover tending to fall out of the pot when water is to be decanted, if it is not kept in position with the other hand. This is cumbersome since the knob provides the only lock on the cover. With larger pots the pot often have two handles which demand the use of both hands. The only way to hold the cover against the pot is to use the fingers which causes serious risks for burns.

### Summary of the invention

One object of the current invention is thus to design a cooking pot with which it is possible to decant water (for example potato water) with one hand without risking the cover falling out.

The current invention is defined in claim 1 and is characterized in that the handles on the pot are a pair arranged on opposite sides of the periphery of the pot and that the handles on the cover are two handles arranged on opposite sides of the periphery of the cover part.

### Brief description of the drawings

The advantages and characteristics of the invention are in detail better understood by way of the following description of preferred embodiments which refer to the figures that form part of the description, in which
**Fig. 1** shows a cooking pot not according to the invention, in its decanting position;
**Fig. 2** shows the cooking pot according to Fig. 1 in a closed boiling position;
**Fig. 3** shows a cooking pot according to the invention, in its decanting position;
**Fig. 4** shows the cooking pot according to the embodiment in Fig. 4 in a closed boiling position;

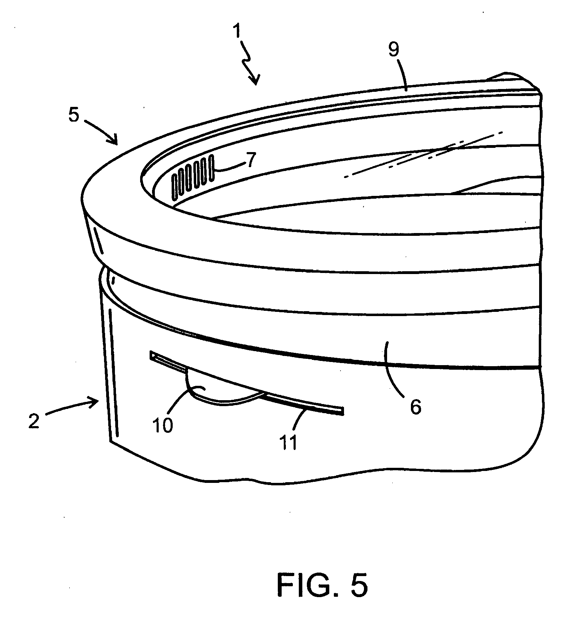

**Fig. 5** shows a locking lip more in detail, which forms part of a cooking pot according to the invention.

### Detailed description of the invention

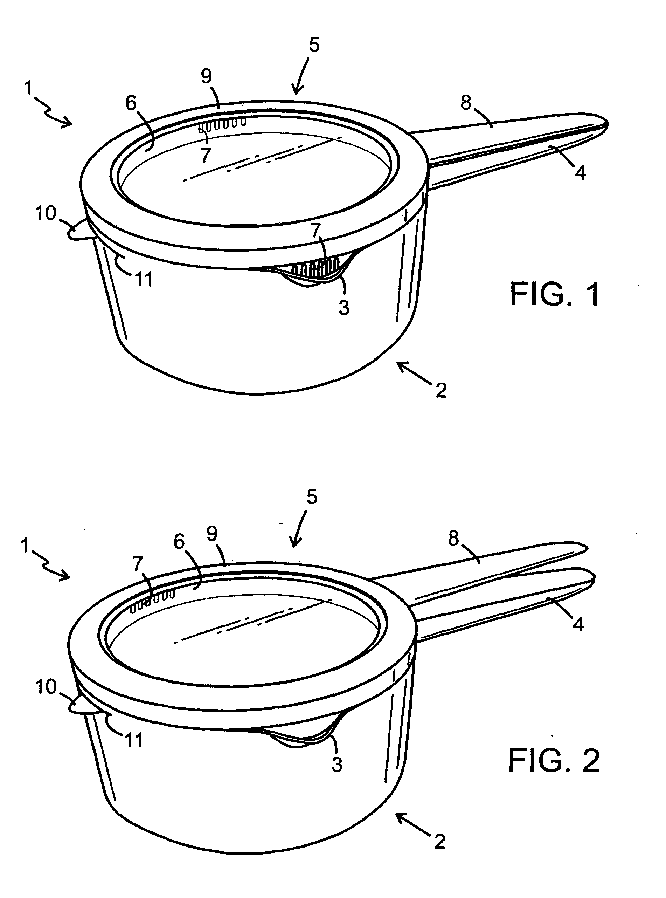

Fig. 1 shows a cooking pot 1 comprising a pot 2 with a circular horizontal cross section and a drainage device 3 in the form of a spout. A second identical drainage device is arranged on the opposite side of the pot, but cannot be seen in the figure. On the outside of the cooking pot a handle 4 is arranged, which is displaced around 90° along the periphery of the pot 2, in relation to the drainage device 3. The cooking pot 1 also comprises a cover 5 comprising a perpendicular, annular flange 6, the diameter of which is slightly less than the inner diameter of the pot 2, and which is intended to be arranged revolving coaxially within the periphery of the pot 1. On the upper side of the flange 6 a covering part 9 is arranged, the diameter of which surpasses the diameter of the pot 2, so that it when the cover 5 is localized on the pot 2, is with its lower side resting on the upper edge of the pot 2. The flange 6 within an area exhibits several radially arranged through holes 7. On the opposite side of the periphery of the flange 6 there is likewise arranged an identical area with several radially arranged through holes. On the shell surface of the cover part 9 a handle 8 is arranged in a position which is displaced around 90° from the area with the through holes 7.

The areas with the radially arranged through holes 7 on the flange 6 are arranged so that, when the cover 5 is arranged on the pot 2 and the cover 5 is turned in relation to the pot 2 so that the handle 8 on the pot 5 and the handle 4 on the pot 2 coincide, the areas with the radially arranged through holes 7 coincide with the positions of the drainage devices 3. It is then possible to decant the fluid that is present in the pot 2 through the radially arranged through holes without losing the solid substance in the pot 2, by taking hold of the two coinciding handles 4, 8 and tilting the pot 2 with any of the drainage devices 3 pointing downwards. The cooking pot 1 is thus in its position for drainage (Fig. 1). This position may also be used for cooking, whereby the holes function as a steam valve.

In Fig. 2 the same cooking pot 1 is shown with the cover 5 turned in relation to the pot 2, so that the areas with the radially arranged through holes 7 are prevented from communicating with the environment by way of the inner wall of the pot 2 closing the holes 7. The cooking pot 1 is thus in its boiling position (Fig. 2).

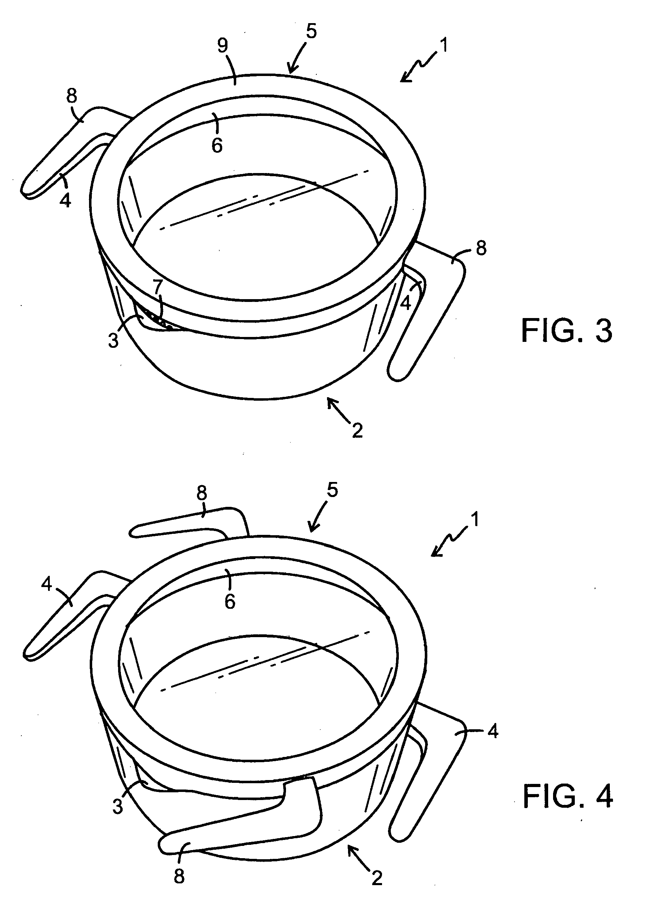

Figs. 3 and 4 show an embodiment of a cooking pot according to the invention.

Fig. 3 shows a cooking pot 1 comprising a pot 2 with a circular horizontal cross section and a drainage device 3 in the form of a spout. A second identical drainage device is arranged on the opposite side of the pot, but is not shown in the figure. On the outside of the cooking pot two handles 4 are arranged on opposite sides of the periphery of the pot, displaced around 90° along the periphery of the pot 2, in relation to drainage device 3 of the pot. The cooking pot 1 moreover comprises a cover 5 comprising a perpendicular, annular flange 6, the diameter of which is slightly less than the inner diameter of the pot 2, and which is intended to be arranged revolving coaxially within the periphery of the pot 1. On the upper side of the flange 6 a covering part 9 is arranged, the diameter of which surpasses the diameter of the pot 2, so that it when the cover 5 is localized on the pot 2, is with its lower side resting on the upper edge of the pot 2. The flange 6 within an area exhibits several radially arranged through holes 7. On the opposite side of the periphery of the flange 6 there is likewise arranged an identical area with several radially arranged through holes. On the shell surface of the cover part 9 two handles 8 are arranged on opposite sides of the periphery of the cover part 9, in a position which is displaced around 90° from the area with the through holes 7.

The area with the radially arranged through holes 7 on the flange 6 is arranged so that, when the cover 5 is arranged on the pot 2 and the cover 5 is turned in relation to the pot 2, so that the handle 8 on the pot 2 and the handle 4 on the pot 2 coincide, the area with the radially arranged through holes 7 coincides with the position of the drainage device 3. It is now possible to decant the fluid in the pot 2 through the radially arranged through holes without losing the solid substance in the pot 2, by taking hold of the two pairs of coinciding handles 4, 8 and tilting the pot 2 with one of the drainage devices 3 pointing downwards. The cooking pot 1 is thus in its drainage position (Fig. 1).

In Fig. 4 the same cooking pot 1 is shown with the cover 5 turned in relation to the pot 2, so that the area with the radially arranged through holes 7 is prevented from communicating with the environment by way of the inner wall of the pot 2 closing the holes 7. The cooking pot 1 is thus in its boiling position (Fig. 2).

As is shown in Fig. 3, the flange 6 is fitted with a locking lip 10 which stretches radially outward. This locking lip 10 is intended to interact with a slot 11 in the periphery of the pot 2 and is still a hindrance against the cover falling off in connection with the pot 2 being tilted for decanting fluid. In order to be able to place the cover on the pot the locking lip 10 must consequently be inserted in the slot 11. The peripheral extension of the slot 11 is at least large enough to allow the cover 4 to be turned between the boiling position and the drainage position.

The cover 5 may be variously designed. In the embodiments described above the radially speaking central part of the cover part is made out of a transparent material, for example toughened glass, which allows a clear insight into the pot during cooking and the like. Within the scope of the invention (but not shown) the cover may be fitted with a knob in the same manner as previously known covers for cooking pots. The drainage devices 3 in the pot 2 according to the embodiment in Figs. 1 and 2 serve the purpose of being suitable for both left- or right-handed people. The cooking pots may instead have only one drainage device and thus be adapted to either right- or left-handed people. Moreover, the slot 11 may in its extension be designed so that it is possible to turn the cover from the drainage position to the boiling position, either clockwise or counter-clockwise, or in both directions. A possible embodiment of the invention may furthermore be devoid of the locking lip 10 and the slot 11. Small pots do not need this arrest to the same extent.

The foregoing is exemplifying embodiments of the current invention and the person skilled in the art realizes that modifications of these embodiments may be carried out without departing from the scope of the invention as defined by the accompanying claims.

## Claims

1. Cooking pot (1) for preparing food comprising a pot (2) with a circular horizontal cross section and at least one drainage device (3) and at least one handle (4) on the outside of the cooking pot as well as a cover (5) comprising a perpendicular, annular flange (6), the diameter of which is slightly less than the inner diameter of the pot (2), which flange (6) is fitted with at least one radially arranged through hole (7), and at least one handle (8), wherein the through hole (7) is arranged so that when the cover (5) is arranged on the pot (2), the peripheral position of the at least one through hole (7) coincides with that of the drainage device (3) when the peripheral positions of the handles (4, 8) on the pot (2) and the cover (5) coincide with each other in a drainage position, and the peripheral position of the at least one through hole (7) does not coincide with that of the drainage device (3) when the peripheral positions of the handles (4, 8) on the pot (2) and the cover (5) do not coincide with each other in a boiling position, **characterized in that** the handles (4) on the pot (2) are a pair arranged on opposite sides of the periphery of the pot (2) and that the handles (8) on the cover are two handles arranged on opposite sides of the periphery of the cover part (9).

2. Cooking pot for preparing food according to claim 1, in which the handles (4, 8) are displaced around 90° along the periphery of the pot (2), in relation to drainage device (3) and the area with the at least one through hole (7), respectively.

3. Cooking pot for preparing food according to any one of claims 1-2, in which the flange (6) is fitted with a locking lip (10) which stretches radially outward and is intended to interact with a slot (11) in the periphery of the pot (2) wherein the peripheral extension of the slot (11) is at least large enough to allow the cover (4) to be turned between the boiling position and the drainage position.

4. Cooking pot for preparing food according to any one of claims 1-3, in which the pot (2) is fitted with two drainage devices (3) arranged on opposite sides of the periphery of the pot (2), and the flange (6) is fitted with at least one through hole (7) on opposite sides of the flange (6).

5. Cooking pot for preparing food according to any one of claims 1-4, in which the handles (4) of the pot (2) and the handles (8) of the cover (5) are configured for a user to take hold of the coinciding handles (4, 8) in the drainage position with one hand for tilting the cooking pot (1).

6. Cooking pot for preparing food according to any one of claims 1-5, in which the cooking pot (1) is configured for the cover (5) to be turned between the boiling position and the drainage position when the cover (5) is arranged on the pot (2).

## Patentansprüche

1. Kochtopf (1) für die Zubereitung von Speisen umfassend einen Topf (2) mit einem kreisförmigen horizontalen Querschnitt mit mindestens einer Abgießvorrichtung (3) und mit mindestens einem Griff (4) an der Außenseite des Kochtopfes sowie einen Deckel (5) mit einem senkrechten, ringförmigen Flansch (6), wobei dessen Durchmesser geringfügig kleiner ist als der innere Durchmesser des Topfes (2), wobei der Flansch (6) mit mindestens einem radial angeordneten Durchgangsloch (7) versehen ist, sowie mit mindestens einem Griff (8), wobei das Durchgangsloch (7) derart angeordnet ist, dass wenn der Deckel (5) auf dem Topf (2) sitzt, die Umfangsposition des mindestens einen Durchgangsloches (7) übereinstimmt mit der der Abgießvorrichtung (3), falls die Umfangspositionen der Griffe (4, 8) an dem Topf (2) und dem Deckel (5) in einer Abgießposition miteinander übereinstimmen, und die Umfangsposition des mindestens einen Durchgangsloches (7) nicht mit der der Abgießvorrichtung (3) übereinstimmt, falls die Umfangspositionen der Griffe (4, 8) an dem Topf (2) und dem Deckel (5) in einer Kochposition nicht miteinander übereinstimmen, **dadurch gekennzeichnet, dass** die Griffe (4) am Topf (2) ein Paar sind, die an gegenüberliegenden Seiten an der Außenseite des Topfes (2) angeordnet sind, und dass die Griffe (8) am Deckel zwei Griffe sind, die an gegenüberliegenden Seiten am Umfang des Deckelteils (9) angeordnet sind.

2. Kochtopf zur Zubereitung von Speisen nach Anspruch 1, wobei die Griffe (4, 8) entlang des Umfangs des Topfes (2) um 90° versetzt zur Abgießvorrichtung (3) sowie zum Bereich mit dem mindestens einen Durchgangsloch (7) angeordnet sind.

3. Kochtopf zur Zubereitung von Speisen nach einem der Ansprüche 1 bis 2, wobei der Flansch (6) mit einer Arretierlippe (10) versehen ist, die sich radial nach außen erstreckt und dazu vorgesehen ist, mit einem Schlitz (11) in dem Umfang des Topfes (2) zu wechselwirken, wobei die Ausdehnung des Schlitzes (11) in Umfangsrichtung mindestens groß genug ist, um den Deckel (4) zwischen der Kochposition und der Abgießposition zu drehen.

4. Kochtopf zur Zubereitung von Speisen nach einem der Ansprüche 1 bis 3, wobei der Topf (2) mit zwei Abgießvorrichtungen (3) versehen ist, die auf gegenüberliegenden Seiten an der Außenseite des Topfes angeordnet sind, wobei der Flansch (6) mit mindestens einem Durchgangsloch (7) an gegenüberliegenden Seiten des Flansches (6) versehen ist.

5. Kochtopf zur Zubereitung von Speisen nach einem der Ansprüche 1 bis 4, in dem die Griffe (4) des Topfes und die Griffe (8) des Deckels (5) für einen Benutzer angepasst sind, um die in der Abgießposition zusammenfallenden Griffe (4, 8) mit einer Hand anzufassen, um den Kochtopf (1) zu verschwenken.

6. Kochtopf zur Zubereitung von Speisen nach einem der Ansprüche 1 bis 5, wobei der Kochtopf (1) angepasst ist, um den Deckel (5) zwischen der Kochposition und der Abgießposition zu drehen, wenn der Deckel (5) auf dem Topf (2) angeordnet ist.

## Revendications

1. Marmite de cuisson (1) pour préparer des aliments, comprenant une marmite (2) présentant une section transversale horizontale circulaire et au moins un dispositif de drainage (3) et au moins une poignée (4) sur le côté extérieur de la marmite de cuisson, ainsi qu'un couvercle (5) comprenant une bride annulaire perpendiculaire (6) dont le diamètre est légèrement inférieur au diamètre intérieur de la marmite (2), ladite bride (6) comportant au moins un trou traversant disposé radialement (7), et au moins une poignée (8), dans laquelle le trou traversant (7) est formé de telle sorte que lorsque le couvercle (5) est agencé sur la marmite (2), la position périphérique dudit au moins un trou traversant (7) coïncide avec celle du dispositif de drainage (3) lorsque les positions périphériques des poignées (4, 8) sur la marmite (2) et le couvercle (5) coïncident l'une avec l'autre dans une position de drainage, et la position périphérique dudit au moins un trou traversant (7) ne coïncide pas avec celle du dispositif de drainage (3) lorsque les positions périphériques des poignées (4, 8) sur la marmite (2) et le couvercle (5) ne coïncident pas l'une avec l'autre dabs une position d'ébullition, **caractérisée en ce que** les poignées (4) sur la marmite (2) forment une paire qui est agencée sur des côtés opposés de la périphérie de la marmite (2), et **en ce que** les poignées (8) sur le couvercle sont deux poignées qui sont agencées sur des côtés opposés de la périphérie de la partie de couvercle (9).

2. Marmite de cuisson pour préparer des aliments selon la revendication 1, dans laquelle les poignées (4, 8) sont déplacées d'environ 90° le long de la périphérie de la marmite (2), par rapport au dispositif de drainage (3) et à la région comportant ledit au moins un trou traversant (7), respectivement.

3. Marmite de cuisson pour préparer des aliments selon l'une quelconque des revendications 1 à 2, dans laquelle la bride (6) comprend une lèvre de verrouillage (10) qui s'étire radialement vers l'extérieur et qui est destinée à interagir avec une fente (11) dans la périphérie de la marmite (2), dans laquelle l'extension périphérique de la fente (11) est au moins suffisamment grande pour permettre au couvercle (4) d'être tourné entre la position d'ébullition et la position de drainage.

4. Marmite de cuisson pour préparer des aliments selon l'une quelconque des revendications 1 à 3, dans laquelle la marmite (2) est équipée de deux dispositifs de drainage (3) qui sont agencés sur des côtés opposés de la périphérie de la marmite (2), et la bride (6) comporte au moins un trou traversant (7) sur des côtés opposés de la bride (6).

5. Marmite de cuisson pour préparer des aliments selon l'une quelconque des revendications 1 à 4, dans laquelle les poignées (4) de la marmite (2) et les poignées (8) du couvercle (5) sont configurées de telle sorte qu'un utilisateur saisisse les poignées coïncidentes (4, 8) dans la position de drainage avec une seule main pour incliner la marmite de cuisson (1).

6. Marmite de cuisson pour préparer des aliments selon l'une quelconque des revendications 1 à 5, dans laquelle la marmite de cuisson (1) est configurée de telle sorte que le couvercle (5) soit tourné entre la position d'ébullition et la position de drainage lorsque le couvercle (5) est agencé sur la marmite (2).
